## Europäisches Patentamt

(19) **European Patent Office**

**Office européen des brevets**

(11) Numéro de publication: **0 148 652**
**B1**

(12) **FASCICULE DE BREVET EUROPEEN**

(45) Date de publication du fascicule du brevet: **14.12.88**

(51) Int. Cl.⁴: **F 16 L 59/02, F 16 L 59/14**

(21) Numéro de dépôt: **84401695.6**

(22) Date de dépôt: **21.08.84**

(54) **Perfectionnements apportés aux moyens d'isolation thermique de tuyauteries soumises à des contraintes thermiques, hydrostatiques et mécaniques et à leur mise en place, et procédé de réalisation desdits moyens d'isolation.**

(30) Priorité: **28.12.83 FR 8320911**

(43) Date de publication de la demande:
**17.07.85 Bulletin 85/29**

(45) Mention de la délivrance du brevet:
**14.12.88 Bulletin 88/50**

(84) Etats contractants désignés:
**AT BE CH DE FR GB IT LI LU NL SE**

(56) Documents cités:
**CH-A- 587 979**
**FR-A-1 327 676**
**FR-A-1 424 212**
**FR-A-2 248 251**
**FR-A-2 287 642**
**FR-A-2 390 280**
**FR-A-2 406 778**
**FR-A-2 501 826**
**GB-A-1 107 969**
**GB-A-1 306 831**
**US-A-1 771 216**
**US-A-2 857 931**
**US-A-3 420 277**
**US-A-3 685 546**
**US-A-3 895 143**
**US-A-4 044 184**

(73) Titulaire: **HUTCHINSON S.A.**
**2 rue Balzac**
**F-75008 Paris (FR)**

(72) Inventeur: **Argy, Gilles**
**15 Ter rue Nationale**
**F-78940 La Queue en Yvelines (FR)**
Inventeur: **Marchal, Philippe**
**15 rue des Gloriettes Carnetin**
**F-77400 Lagny Sur Marne (FR)**
Inventeur: **Grapin, Michel**
**9 rue de Versailles**
**F-78150 Le Chesnay (FR)**

(74) Mandataire: **Ores, Irène et al**
**CABINET ORES 6, Avenue de Messine**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Description

La présente invention est relative à des perfectionnements apportés aux moyens d'isolation thermique de tuyauteries soumises à des contraintes, qu'elles soient thermiques, hydrostatiques et/ou mécaniques et à la mise en place de ces moyens d'isolation sur lesdites tuyauteries; elle est en outre relative à des procédés de réalisation de ces nouveaux moyens d'isolation.

Dans les champs pétroliers off-shore, les puits de production sont reliés à une plateforme de production ou à un collecteur sous-marin par des conduites sous-marines disposées au fond de la mer. Il est usuel qu'une plateforme de production (qui assure un premier traitement du pétrole brut) soit reliée à plusieurs puits, le nombre de ceux-ci dépendant d'un grand nombre de paramètres tels que importance et débit du champ, profondeur d'eau, etc.

L'huile sort des puits de production à une température variable (70 à 95°C) suffisante pour assurer, dans tous les cas, son écoulement dans le tube de forage.

Lorsqu'il s'agit de pétrole léger, celui-ci est alors acheminé à la plateforme par une conduite sous-marine classique en métal, et arrive à la plateforme de production à une température, variable selon la longueur du tuyau, comprise entre celle de la tête de puits et celle de l'eau de mer au voisinage immédiat de la conduite.

Par contre, en ce qui concerne l'acheminement des huiles lourdes à haute viscosité ou des huiles paraffiniques par une conduite en métal, le pétrole véhiculé par cette conduite va progressivement être porté à la température de l'eau de mer. A une certaine distance du puits il va devenir trop visqueux ou des dépôts solides vont apparaître, entraînant l'obturation de la conduite. Il est bien évident que la distance critique d'apparition de ce phénomène sera d'autant plus petite que la température de l'eau de mer sera plus faible et, que, par voie de conséquence, la profondeur à laquelle se trouvera la conduite, sera plus grande.

Le problème se pose également pour les gazoducs entre les puits et la plateforme où un abaissement important de la température du gaz entraîne la formation d'hydrates et l'obturation progressive de la conduite.

La nécessité d'isoler thermiquement les tuyauteries pour les soustraire dans toute la mesure du possible aux effets adverses des basses températures de l'environnement marin, s'est donc très rapidement imposée aux exploitants des plateformes "off-shore", dans le but de réduire au maximum le gradient de température du brut entre sa sortie du puits de forage et son arrivée à la plateforme de production, pour qu'il reste faible, de l'ordre de 5°C à 30°C.

La solution qui a été proposée, conformément à l'Art antérieur, pour réaliser l'isolation des tuyauteries sous-marines de ce type, est représentée par la disposition d'une gaîne métallique extérieure qui entoure la tuyauterie de collecte du brut à distance, l'intervalle entre la tuyauterie intérieure de collecte et la gaîne métallique extérieure étant rempli d'un matériau thermiquement isolant constitué par de la mousse de polyuréthane. Toutefois, cette solution présente des inconvénients importants tant sur le plan économique que sur le plan technologique. En effet, alors que la tuyauterie intérieure de collecte doit être résistante aux pressions internes développées par l'écoulement du brut à une température relativement élevée, la gaîne extérieure doit être résistante aux pressions hydrostatiques d'écrasement auxquelles la soumet l'environnement marin du fond de la mer, en sorte qu'elle doit être réalisée en acier et avoir une épaisseur relative importante, apte à résister aux pressions élevées auxquelles elle est soumise, si bien qu'elle est d'un prix de revient très élevé.

La mousse de polyuréthane injectée in situ est relativement peu résistante aux pressions hydrostatiques élevées qui prévalent au fond de la mer, en sorte qu'en cas de perforation accidentelle de la gaîne métallique extérieure, la mousse de polyuréthane isolante est détruite à la fois par la pression hydrostatique qu'elle est alors amenée à subir directement et sans protection, et par le milieu marin qui l'hydrolyse; l'injection a lieu sans possibilité de contrôle de qualité de l'isolation réalisée, en sorte qu'elle peut présenter des défauts d'isolation non maîtrisés et non maîtrisables.

En outre, la gaîne extérieure doit comporter des solutions de continuité pour permettre les oudage de tubes successifs adjacents sur la barge, afin de constituer la tuyauterie de collecte thermiquement isolée visée; il est donc nécessaire de laisser au voisinage des extrémités adjacentes de jonction de deux tubes successifs, un intervalle d'une quarantaine de centimètres non isolé, pour permettre leur soudage; après soudage des extrémités des tubes les unes aux autres, l'intervalle entre deux tronçons de gaîne est comblé par la mise en place d'un manchon qui est soudé aux extrémités de deux tronçons de gaîne voisins, pour obtenir une gaîne extérieure continue, en laissant toutefois un orifice pour l'injection in situ de la mousse de polyuréthane thermiquement isolante, orifice qui est ensuite bouché par soudure-bouchon. Pour éviter l'altération du matériau isolant par les températures utilisées pour le soudage, lors de l'opération de soudure-bouchon, il est nécessaire de protéger le matériau isolant par l'interposition d'anneaux en amiante.

Les opérations de mise en place des tronçons de gaîne autour des tubes intérieurs, de soudage des extrémités adjacentes des tubes intérieurs successifs entre elles, de mise en place et de soudage de manchons dans les solutions de continuité entre les tronçons de gaîne voisins, d'injection in situ de la mousse de polyuréthane isolante et de soudage d'obturation des orifices d'injection ménagés dans les joints de soudure des manchons aux tronçons de gaîne, avec interposition d'anneaux d'amiante, doivent en outre nécessairement être réalisées sur la barge de pose avant de descendre les tuyauteries pourvues de leur dispositif d'isolation, sur les fonds marins sur lesquels elles doivent être posées. La durée d'immobilisation de la barge sur un site est donc relativement longue avant que la tuyauterie isolée relie effectivement un puits de forage à une plateforme de production, et grève lourdement le prix de revient de la pose de ces tuyauteries thermiquement isolées.

Il a également été proposé conformément à l'Art antérieur, de pourvoir les tuyauteries de transfert du brut des puits à la plateforme de production off-shore d'une gaine extérieure constituée par un tube en matière plastique rigide telle que PVC ou polyéthylène, l'intervalle entre une telle gaine extérieure et la tuyauterie étant rempli d'un matériau thermiquement isolant tel que mousse de polyuréthane.

Toutefois, cette solution n'est pas satisfaisante elle non plus, car la résistance de la gaine extérieure en PVC ou polyéthylène rigide est insuffisante à l'égard des pressions hydrostatiques d'écrasement qui règnent dans la mer aux grandes profondeurs, notamment supérieures à 50 mètres; de plus, les opérations de jointoyage ne sont pas moins complexes que dans le cas où la gaîne extérieure est en acier; en outre, on rencontre pour la pose, les réparations et pour faire face aux conséquences d'éventuelles avaries, des problèmes similaires à ceux qui ont été exposés plus haut en liaison avec le système d'isolement thermique constitué par de la mousse de polyuréthane interposée entre la tuyauterie et la gaîne extérieure en matière plastique rigide.

On connaît aussi le Brevet US-A-2 857 931 qui propose de pourvoir des conduites pour pose souterraine ou à l'air libre (constituées de tuyauteries métalliques adjacentes soudées l'une à l'autre au niveau de leurs extrémités aboutées) d'un revêtement d'isolation thermique en un matériau cellulaire, à cellules ouvertes, qui présente une résistance mécanique élevée permettant d'éliminer la nécessité d'utiliser une gaine extérieure enveloppant le revêtement isolant et les tuyauteries.

Une gaine extérieure est utilisée uniquement pour permettre le moulage du matériau isolant cellulaire. Après soudage des extrémités aboutées des tuyauteries métalliques, l'intervalle existant entre deux tuyauteries adjacentes pour permettre le soudage est comblé à l'aide d'un deuxième moule permettant le moulage sur place d'un anneau réalisant la continuité du revêtement au niveau de l'intervalle précité.

Cet anneau peut être moulé séparément en deux parties destinées à être appliquées dans cet intervalle et collées aux portions adjacentes du revêtement isolant.

Une pellicule de protection est appliquée sur le revêtement pour fermer les cellules ouvertes du matériau isolant, une pellicule similaire étant appliquée sur les tuyauteries avant le moulage de façon à permettre le glissement axial du revêtement et de l'élément de jointoyage (à cet effet, les tuyauteries peuvent être enduites d'huile).

Toutefois, le revêtement décrit dans le Brevet US-A-2 857 931 nécessite l'utilisation sur place d'un moule (ce qui rend longue la réalisation du revêtement) et n'est pas adapté au milieu sous-marin où les contraintes mécaniques ne sont pas les mêmes que dans le milieu souterrain, notamment à cause de la présence et nature de ladite pellicule de protection.

On connaît également la Demande de Brevet FR-A-2 248 251 qui décrit un matériau d'isolation thermique pour citernes sphériques sous pression, qui sont destinées à contenir du gaz naturel à l'état liquéfié, c'est-à-dire à une température extrêmement basse, telle que -160°C, et qui sont transportées par bateaux. Ce matériau d'isolation thermique comprend une pluralité de couches en un matériau isolant lacunaire séparées par des couches d'élastomère.

Toutefois, l'utilisation telle quelle de ce matériau ne convient pas au milieu sous-marin pour les raisons précitées.

La présente invention s'est en conséquence donné pour but de pourvoir à des moyens d'isolation thermique de tuyauteries soumises à d'importantes contraintes thermiques, hydrostatiques et mécaniques, qui répondent mieux aux nécessités de la pratique que les moyens d'isolation thermique visant au même but, proposés dans l'Art antérieur, notamment en ce qu'ils permettent la jonction très rapide, sur la barge, non seulement de tubes successifs pour former une tuyauterie, mais également des moyens d'isolation associés aux tubes, pour combler les solutions de continuité de l'isolation entre les tubes adjacents à joindre entre eux, en ce que les moyens d'isolation thermique présentent non seulement d'excellentes propriétés isolantes, mais également une excellente résistance aux pressions hydrostatiques d'écrasement auxquelles ils sont soumis sur les fonds marins, en ce qu'en raison de la rapidité des opérations de jointoyage, la barge est immobilisée sur le site de pose pendant une durée réduite, diminuant ainsi considérablement les frais qu'implique la mise en place des tuyauteries sur les fonds marins, en ce que l'isolation thermique conforme à l'invention est étanche et résistante à l'environnement marin, si bien qu'elle n'est pas susceptible d'entraîner un envahissement accidentel par l'eau de mer et supprime pratiquement les risques d'avaries liés à un tel envahissement accidentel et en ce que les réparations locales que peut éventuellement avoir à subir l'isolation thermique sont relativement faciles à réaliser étant donné l'élimination du risque d'envahissement de ladite isolation par l'eau de mer.

La présente invention a pour objet un dispositif d'isolation thermique d'une conduite sous-marine soumise à des contraintes thermiques, hydrostatiques et mécaniques élevées, et constituée d'une pluralité de tubes métalliques, rigides et adjacents, destinés à être assemblés bout à bout, lequel dispositif comprend:

- une première couche en élastomère, qui entoure ladite conduite à isoler, assurant ainsi la protection anti-corrosion de cette dernière, et

- un moyen d'isolation thermique qui comprend une pluralité de couches en matériau isolant lacunaire renfermant de l'air séparées par des couches d'élastomère, les différentes couches adhérant l'une à l'autre, et qui est superposé de façon continue sur la première couche susdite, lequel dispositif comprenant également:

- une deuxième couche en élastomère étanche à l'eau de mer, résistant à l'abrasion, qui entoure ledit moyen d'isolation thermique, et

- un moyen de jointoyage rapide et étanche des dispositifs d'isolation de deux tubes adjacents, constitué par un anneau ou des coquilles préfabriqués en élastomère incorporant des éléments de matériau thermiquement isolant et résistant à la pression hydrostatique, après soudage des tubes métalliques, dans les zones d'extrémité correspondantes desdits tubes, dépourvues de dispositifs d'isolation, et fixé aux dispositifs d'isolation adjacents desdits tubes à l'aide d'un élastomère ou analogue d'obturation étanche, notamment d'un élastomère auto-vulcanisant, ou d'une gaine thermo-rétractable, pour constituer des zones de continuité entre dispositifs d'isolation adjacents, lesdites première et deuxième couches et ledit moyen d'isolation protégeant chaque tube d'une conduite à l'exclusion des extrémités de ce dernier, qui sont laissées sans protection pour permettre la soudure bout à bout de tubes adjacents les uns aux autres avant l'emplacement dudit moyen de jointoyage.

Selon une variante de réalisation avantageuse du dispositif d'isolation conforme à la présente invention, ledit dispositif comprend:

- une première couche en élastomère, qui entoure ladite conduite à isoler, assurant ainsi la protection anti-corrosion de cette dernière, et

- un moyen d'isolation thermique qui comprend une couche en matériau isolant lacunaire renfermant de l'air, et qui est superposé de façon continue sur la première couche susdite, lequel dispositif comportant également:

- une deuxième couche en élastomère étanche à l'eau de mer, résistant à l'abrasion, qui entoure ledit moyen d'isolation thermique, et

- un moyen de jointoyage rapide et étanche des dispositifs d'isolation de deux tubes adjacents, constitué par un anneau ou des coquilles préfabriquées en élastomère incorporant des éléments de matériau thermiquement isolant et résistant à la pression hydrostatique, après soudage des tubes métalliques, dans les zones d'extrémité correspondantes desdits tubes, dépourvues de dispositifs d'isolation, et fixé aux dispositifs d'isolation adjacents desdits tubes à l'aide d'un élastomère ou analogue d'obturation étanche, notamment d'un élastomère auto-vulcanisant, ou d'une gaine thermo-rétractable, pour constituer des zones de continuité entre dispositifs d'isolation adjacents et en ce que ledit moyen d'isolation thermique est réalisé sous la forme d'au moins deux secteurs adhérisés entre eux par une couche radiale d'élastomère pour former autour du tube à isoler une structure continue, lesdites première et deuxième couches et ledit moyen d'isolation protégeant chaque tube d'une conduite à l'exclusion des extrémités de ce dernier, qui sont laissées sans protection pour permettre la soudure bout à bout de tubes adjacents les uns aux autres avant l'emplacement dudit moyen de jointoyage.

Selon un autre mode de réalisation avantageux du dispositif d'isolation conforme à la présente invention, le matériau isolant est un matériau syntactique constitué par des sphères de mousse de PVC à cellules fermées enrobées dans une matrice à base de résine époxy, dont la conductivité thermique est abaissée par adjonction de microbilles de verre.

Selon encore un autre mode de réalisation avantageux du dispositif d'isolation conforme à la présente invention, le matériau isolant est constitué par un matériau syntactique comprenant des microbilles de verre et des billes en matière plastique, enrobées dans une matrice en résine époxy.

Selon encore un autre mode de réalisation avantageux du dispositif d'isolation conforme à la présente invention, l'élastomère (utilisé comme matériau absorbant les impacts et, en même temps, comme matériau d'adhérisation des couches ou secteurs en matériau isolant) est du caoutchouc allégé par des microbilles de verre qui sont enrobées dans une matrice en caoutchouc.

Selon un mode de réalisation avantageux du moyen de jointoyage conforme à l'invention, celui-ci est constitué par un anneau en élastomère fendu longitudinalement ou par deux demi-coquilles en élastomère, l'anneau ou les demi-coquilles étant renforcés par au moins une bande en matériau lacunaire qui a pour rôle de limiter le flux thermique dans ledit dispositif de jointoyage.

Selon un autre mode de réalisation avantageux du moyen de jointoyage conforme à la présente invention, celui-ci comprend des inserts métalliques pour le cerclage ou la fixation dudit moyen de jointoyage.

Selon une disposition avantageuse de ce mode de réalisation, les inserts métalliques sont montés dans ledit anneau en élastomère de manière à être solidaires d'une part de la première couche en élastomère anti-corrosion et d'autre part dudit anneau en élastomère.

Selon encore un autre mode de réalisation avantageux du moyen de jointoyage conforme à l'invention, l'élastomère d'obturation étanche qui solidarise le moyen de jointoyage avec les dispositifs d'isolation thermique adjacents montés sur des tubes successifs soudés axialement l'un à l'autre, est pourvu, au moins dans la zone soudée dépourvue de dispositifs d'isolation, d'une gaine en un matériau propre à exercer sur l'élastomère d'obturation, une force de compression de nature à améliorer encore les propriétés d'adhérence et de bouchage dudit élastomère sur les extrémités aboutées des tubes successifs soudés, initialement dépourvues de dispositif d'isolation.

Selon encore un autre mode de réalisation avantageux du moyen de jointoyage conforme à l'invention, les zones de continuité de solidarisation de l'anneau de jointoyage en élastomère avec les dispositifs d'isolation thermique adjacents sont protégées chacune par une gaine de protection et d'étanchéité adhérente à chaque zone.

Selon un mode de réalisation avantageux du dispositif d'isolation thermique conforme à la présente invention, la première couche d'élastomère anti-corrosion et la deuxième couche d'élastomère de protection étanche forment, avec le moyen d'isolation thermique, un ensemble solidaire.

La présente invention a en outre pour objet un procédé de mise en place d'un dispositif d'isolation thermique selon l'une quelconque des dispositions qui précèdent, dans lequel:

- ladite première couche d'élastomère, propre à protéger la surface des tubes métalliques, est mise en place sur la surface extérieure desdits tubes, par tous moyens appropriés, et notamment par enroulement ou "rubannage" de manière à laisser libres sur une courte distance les extrémités aboutées desdits tubes;

- ledit moyen d'isolation thermique lacunaire est mis en place, par tous moyens appropriés, sur la couche en élastomère de protection contre la corrosion;

- ladite deuxième couche en élastomère étanche est mise en place, par tous moyens appropriés, et notamment par enroulement ou "rubannage", sur le moyen d'isolation thermique précité, et

- après soudage bout à bout de tubes métalliques successifs, les zones de soudage de ces derniers, qui sont dépourvues de dispositifs d'isolation thermique, sont comblées de façon à assurer la continuité de l'isolation thermique sur la totalité de la longueur de la conduite, à l'aide d'un moyen de jointoyage constitué par un anneau ou des secteurs préfabriqués en élastomère dans lequel sont incorporées des bandes de matériau isolant lacunaire renfermant de l'air, qui ont pour rôle de limiter le flux thermique, lequel moyen de jointoyage est fixé de façon étanche, d'une part, à la zone de soudage susdite et aux extrémités de la couche en élastomère anti-corrosion des moyens d'isolation portés par deux tubes adjacents soudés, à l'aide d'un élastomère auto-vulcanisant, ou mastic, et d'autre part aux parois en élastomère adhérisé qui encapsulent le matériau d'isolation thermique du moyen d'isolation thermique.

Selon un mode de mise en oeuvre avantageux de ce procédé, le moyen d'isolation thermique est soumis préalablement ou après sa mise en place, à un processus de vulcanisation à basse température, inférieure ou égale à 120°C, propre à vulcaniser les feuilles ou couches d'élastomère d'adhérisation.

Selon encore un autre mode de mise en oeuvre avantageux de ce procédé, le moyen d'isolation thermique est soumis à un processus de vulcanisation à basse température conjointement avec la couche d'élastomère sous-jacente qui entoure la surface extérieure de la conduite et avec la couche d'élastomère extérieure qui entoure le moyen d'isolation, après la mise en place de ces éléments superposés sur la conduite isolée.

Selon encore un autre mode de mise en oeuvre préféré de ce procédé, la couche d'élastomère anti-corrosion et la couche en élastomère isolante qui recouvre le moyen d'isolation thermique, font partie intégrante dudit moyen, c'est-à-dire qu'elles forment un tout avec ce dernier.

Selon une autre disposition avantageuse de ce mode de mise en oeuvre, une pluralité de bandes de matériau isolant lacunaire renfermant de l'air, est constituée en enroulements suivant un pas tel qu'il subsiste entre deux bandes successives un espace libre dans lequel est intercalé l'élastomère d'adhérisation, le stratifié obtenu à partir de cette pluralité d'enroulements, présentant une très grande souplesse qui est fonction de la largeur de l'intervalle qui sépare deux pas consécutifs.

Suivant une autre modalité avantageuse du procédé objet de l'invention, les couches superposées qui composent le moyen d'isolation thermique sont adhérisées entre elles préalablement à leur mise en place sur un mandrin ou support analogue.

Suivant le procédé conforme à la présente invention, les secteurs qui forment le moyen d'isolation thermique sont avantageusement préfabriqués par adhérisation des secteurs entre eux par de l'élastomère pour être enfilés sur chacun des tubes à isoler.

Egalement suivant le procédé conforme à la présente invention, la liaison entre les secteurs qui forment ledit moyen d'isolation thermique est réalisée à l'aide d'élastomère cru et l'adhérisation est obtenue par vulcanisation à basse température sur le tube à isoler.

Selon un autre mode de mise en oeuvre préféré du procédé conforme à la présente invention, l'anneau en élastomère qui constitue le moyen de jointoyage est obtenu par enroulements successifs, sur un mandrin, de bandes de matériau isolant lacunaire renfermant de l'air et de bandes d'élastomère, puis vulcanisation de l'ensemble à une température inférieure ou égale à 120°C.

Selon encore un autre mode de mise en oeuvre préféré du procédé conforme à la présente invention, le moyen de jointoyage est fixé aux zones soudées des tubes, dépourvues de dispositifs d'isolation thermique, par un élastomère auto-vulcanisant qui est pourvu d'une gaine en matériau rétractable, notamment en polyéthylène rétractable par chauffage, qui, à l'état rétracté, exerce des forces de compression sur l'élastomère auto-vulcanisant qui sont telles que ce dernier adhère fortement d'une part à la zone de soudure sous-jacente et d'autre part aux couches d'élastomère anti-corrosion qui entourent ladite zone de soudure, pour ancrer le moyen de jointoyage.

La présente invention vise plus particulièrement les moyens et les dispositifs d'isolation thermique de tuyauteries, conformes aux dispositions qui précèdent, les dispositifs de jointoyage desdits moyens d'isolation thermique, ainsi que leurs procédés de production, leurs procédés de mise en place et les tuyauteries thermiquement isolées à l'aide des moyens et dispositifs d'isolation thermique et de jointoyage desdits dispositifs d'isolation.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels:

- la figure 1 montre de façon schématique un dispositif d'isolation thermique conforme à l'invention, vue en coupe longitudinale partielle, monté sur un tube à isoler;

- les figures 2, 3, 5 et 7 représentent, en des vues en coupe transversale schématiques partielles, les modes de réalisation de dispositifs d'isolation thermique conformes à la présente invention;

- la figure 4 est une vue en coupe longitudinale partielle, d'un moyen de jointoyage mis en place dans la zone de soudure de deux tubes soudés bout à bout et fixé aux dispositifs d'isolation adjacents portés par les deux tubes;

- la figure 6 montre une vue en coupe longitudinale partielle d'un mode de solidarisation du moyen de jointoyage conforme à l'invention, avec un dispositif d'isolation adjacent, et

- la figure 8 est une vue en coupe longitudinale partielle d'un dispositif d'isolation thermique conforme à l'invention.

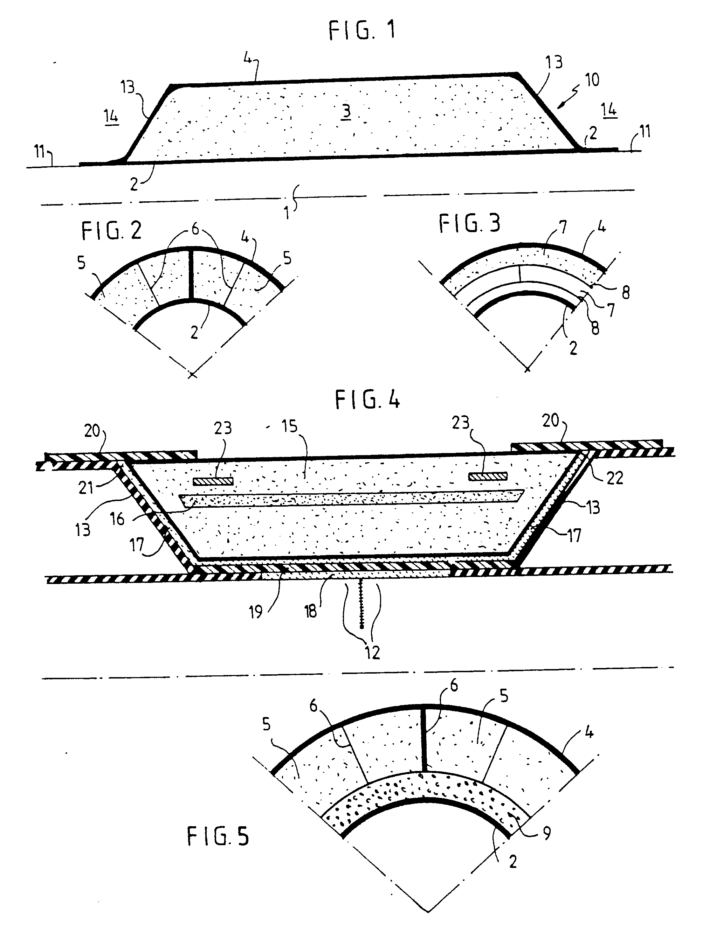

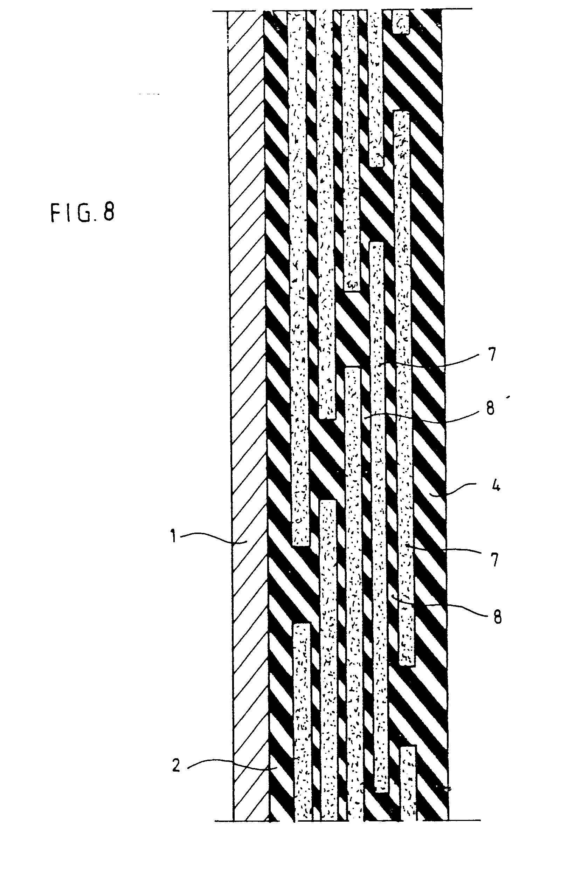

Le dispositif d'isolation thermique conforme à l'invention comprend une couche 2 en élastomère, qui a pour rôle de protéger le tube métallique 1 à isoler, de la corrosion, une couche 3 en matériau isolant lacaunaire renfermant de l'air, et une deuxième couche 4 en élastomère qui protège la couche de matériau isolant 3. De préférence, l'élastomère utilisé pour la réalisation des couches 2 et 4 est, par exemple, du polychloro prène, qui est appliqué en couches de 5-7 mm et de 7-10 mm d'épaisseur, respectivement, d'une part sur le tube 1 et d'autre part sur la couche d'isolation 3. Le dispositif d'isolation désigné d'une façon générale par la référence 10 à la figure 1, peut être réalisé de différentes manières: il peut être constitué par des secteurs 5 en matériau isolant adhérisés entre eux par du caoutchouc 6 (cf.figures 2, 5 et 7), ou par un stratifié comprenant des feuilles 7 du matériau isolant adhérisées entre elles par des feuilles minces 8 en caoutchouc (cf.figures 3 et 8). En particulier, le dispositif d'isolation est formé d'un enroulement de feuilles de matériau isolant dont l'épaisseur est de l'ordre de 5 à 8mm, adhérisées entre elles par des feuilles de caoutchouc de 1 à 2 mm d'épaisseur. Cet enroulement peut être réalisé suivant un pas approprié laissant un intervalle dans lequel est intercalé du caoutchouc pour créer un matériau d'une grande souplesse, qui est fonction de la largeur de l'intervalle qui sépare les bandes de matériau isolant.

Le moyen d'isolation thermique est de préférence constitué par des secteurs 5 ou des feuilles 7 en mousse de polychlorure de vinyle rigide à cellules fermées ou en matériau syntactique comprenant des sphères en mousse de polychlorure de vinyle enrobées dans une matrice à base de résine époxy ou comprenant des microbilles de verre associées à des billes de matière plastique, enrobées dans de la résine époxy.

Les couches 2 et 4 en élastomère peuvent faire ou non partie intégrante du dispositif d'isolation thermique 10.

Selon un mode de réalisation du matériau isolant conforme à l'invention, constitué par des secteurs 5 ou des feuilles 7 adhérisés entre eux par du caoutchouc ou un élastomère analogue, ledit matériau isolant est vulcanisé, avant sa mise en place autour de tubes 1, à une température inférieure ou égale à 120°C, de préférence comprise entre 80 et 100°C, qui est bien supportée par le matériau isolant (et notamment par le "Klegecell", qui est une marque de fabrique déposée au nom de K.R.P. PLASTIQUES, et fournit un produit vulcanisé homogène, résistant aux pressions élevées, qui ne se délamine pas et qui présente d'excellentes propriétés d'isolation thermique tout en résistant bien aux pressions hydrostatiques du milieu marin environnant, qui sont elles-mêmes transmises au tube métallique à isoler.

Selon un autre mode de réalisation du matériau isolant conforme à l'invention, le caoutchouc ou analogue d'adhérisation des secteurs 5 ou des feuilles 7, est vulcanisé à une température inférieure ou égale à 120°C après la mise en place sur le tube à isoler, des secteurs 5, ou le rubannage à spires jointives ou non, sur ledit tube, de bandes 7 de "Klegecell" en alternance avec des bandes de caoutchouc ou analogue, alternance réalisée en superposition et/ou en juxtaposition.

Conformément à ce mode de réalisation, il est avantageux que la couche d'élastomère 2 qui entoure la surface extérieure du tube 1 à isoler et qui est destinée à protéger ladite surface de la corrosion, l'élastomère 6 ou 8, respectivement associé aux secteurs 5 ou aux feuilles 7 en matériau cellulaire tel que "Klegecell" notamment, dans le moyen d'isolation thermique conforme à l'invention, et la couche d'élastomère 4 qui protège le moyen d'isolation thermique, soient vulcanisés à basse température, simultanément, après avoir été mis en place à l'état cru sur le tube 1 à isoler.

L'élastomère d'adhérisation des éléments 5 ou 7 qui constituent le moyen d'isolation thermique, entre eux, est de préférence du caoutchouc de composition quelconque, appropriée au but recherché. Il peut cependant également être envisagé d'utiliser comme caoutchouc d'adhérisation, du caoutchouc allégé dans lequel des microbilles de verre sont enrobées dans du caoutchouc.

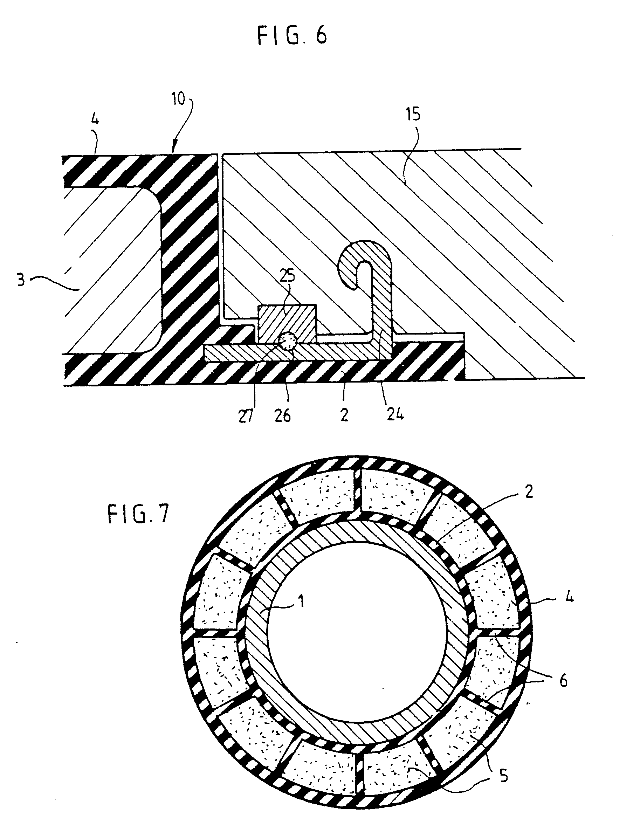

Dans la variante de réalisation représentée à la figure 5, une couche 9 de caoutchouc allégé par des microbilles de verre est interposée entre la couche 2 d'élastomère anti-corrosion et la couche 5 ou 7 de matériau isolant, cette couche 9 ayant pour rôle d'améliorer la tenue du moyen d'isolation thermique conforme à l'invention, aux températures supérieures à 80°C des fluides qui circulent dans les conduites.

Comme le montre la figure 1, le dispositif d'isolation thermique 10 est placé autour d'un tube métallique 1 à isoler de telle manière que la couche d'élastomère anti-corrosion 2 laisse libres les extrémités 11 dudit tube 1 sur une longueur d'environ 30 cm (rapportés à une longueur, par exemple, de 12 mètres pour le tube) pour permettre la soudure ultérieure des tubes métalliques bout à bout entre eux.

Après soudage bout à bout de deux tubes 1 adjacents, la zone de soudure 12 dépourvue de dispositif d'isolation thermique, délimite avec les extrémités correspondantes 13 des moyens d'isolation thermique conformes à l'invention, un espace vide 14 destiné à recevoir un moyen de jointoyage qui comprend un anneau 15 en élastomère dans lequel est incluse au moins une bande 16 du matériau isolant précité, tel que ''Klegecell'' notamment, qui a pour rôle de limiter le flux thermique.

L'anneau 15 est avantageusement préfabriqué et peut être réalisé par moulage ou par enroulements successifs et alternatifs de bandes de matériau isolant 16 et de caoutchouc 8 (cf.figure 8). L'anneau 15 est avantageusement fendu longitudinalement.

Sa fixation dans l'espace 14 est, de préférence réalisée à l'aide d'une couche 17 de mastic butyle ou d'un caoutchouc auto-vulcanisant analogue, qui assure l'adhérence et l'étanchéité d'obturation de l'anneau 15 aux extrémités correspondantes 13 des dispositifs d'isolation thermique adjacents qui délimitent avec la zone de soudure 12, l'espace 14. La fixation de la face interne de l'anneau 15 dans la zone de soudure 12 et sur les extrémités de la couche d'élastomère 2 est, de préférence, réalisée à l'aide d'une couche 18 de mastic butyle pourvu d'une gaine 19 en polyéthylène rétractable qui se rétracte par chauffage et crée des forces de compression qui s'exercent sur le mastic butyle 18 pour renforcer ses propriétés d'adhérence et d'obturation étanche.

En outre, une gaine 20 de protection et d'étanchéité, de préférence en polyéthylène rétractable ou en un autre matériau apte à exercer un effort de compression dans les zones de jointoyage 21-22, est appliquée sur ces zones 21-22.

Dans le mode de réalisation représenté à la figure 4, des inserts métalliques 23 assurent le cerclage de l'anneau 15.

Dans le mode de réalisation représenté à la figure 6, les inserts métalliques comprennent une partie 24 en forme de crochet, qui est solidaire de la couche 2 d'élastomère anti-corrosion, et une partie 25 solidaire de l'anneau 15, les parties 24 et 25 comportant chacune une gorge en regard l'une de l'autre, la réunion des deux gorges formant le canal 26 qui est rempli de mastic butyle 27 pour solidariser les parties 24 et 25 d'inserts métalliques et fixer l'anneau 15 en position dans l'espace 14.

Le dispositif d'isolation thermique conforme à la présente invention est de préférence mis en place en usine sur les tubes à isoler; toutefois, dans certains cas, et notamment dans les cas où le moyen d'isolation thermique est réalisé de façon indépendante, prêt à être posé et donc préalablement vulcanisé, il peut être mis en place soit dans les usines, ateliers ou chantiers de préparation des conduites, soit sur barge. Quant aux moyens de jointoyage, qui sont préfabriqués-,ceux-ci peuvent être montés et fixés, après soudage bout à bout, sur barge, de tubes adjacents, très rapidement, par exemple en l'espace de 5 à 7 minutes, en raison de la conception de ces dispositifs et moyens.

Le dispositif d'isolation thermique conforme à la présente invention, outre qu'il résiste à des pressions hydrostatiques élevées, comme mentionné plus haut, présente, grâce à sa gaine extérieure en élastomère, une étanchéité parfaite à l'égard de l'eau de mer, une excellente résistance à l'abrasion, et une fiabilité telle que sa durée de vie peut être évaluée à 25 ans en moyenne. De plus, le dispositif d'isolation thermique conforme à la présente invention supporte les pressions hydrostatiques qui s'exercent aux profondeurs sous-marines supérieures à 200 mètres et pouvant atteindre 400 mètres et plus; il assure, en outre, une isolation thermique parfaite du fluide qui circule dans les conduites, puisque ce fluide dont la température d'entrée peut être de l'ordre de 95°C, sort sur la plateforme à une température sensiblement égale à la température d'entrée, puisque l'abaissement maximum de température constaté n'excède pas 5°C.

**Revendications**

1. Dispositif d'isolation thermique d'une conduite sous-marine soumise à des contraintes thermiques, hydrostatiques et mécaniques élevées, et constituée d'une pluralité de tubes métalliques, rigides et adjacents, destinés à être assemblés bout à bout, lequel dispositif comprend:

- une première couche (2) en élastomère, qui entoure ladite conduite (1) à isoler, assurant ainsi la protection anti-corrosion de cette dernière, et

- un moyen d'isolation thermique qui comprend une pluralité de couches en matériau isolant lacunaire renfermant de l'air séparées par des couches d'élastomère, les différentes couches adhérant l'une à l'autre, et qui est superposé de façon continue sur la première couche susdite, lequel dispositif est caractérisé en ce qu'il comprend également:

- une deuxième couche (4) en élastomère étanche à l'eau de mer, résistant à l'abrasion, qui entoure ledit moyen d'isolation thermique, et

- un moyen de jointoyage rapide et étanche des dispositifs d'isolation de deux tubes adjacents, constitué par un anneau (15) ou des coquilles préfabriquées en élastomère incorporant des élé-

ments de matériau thermiquement isolant et résistant à la pression hydrostatique, après soudage des tubes métalliques, dans les zones d'extrémité correspondantes destis tubes, dépourvues de dispositifs d'isolation, et fixé aux dispositifs d'isolation adjacents desdits tubes à l'aide d'un élastomère ou analogue d'obturation étanche (18, 21, 22), notamment d'un élastomère auto-vulcanisant, ou d'une gaine thermorétractable, pour constituer des zones de continuité (21, 22) entre dispositifs d'isolation adjacents, lesdites première et deuxième couches et ledit moyen d'isolation protégeant chaque tube d'une conduite à l'exclusion des extrémités (11) de ce dernier, qui sont laissées sans protection pour permettre la soudure bout à bout de tubes (1) adjacents les uns aux autres avant l'emplacement dudit moyen de jointoyage.

2. Dispositif d'isolation thermique d'une conduite sous-marine soumise à des contraintes thermiques, hydrostatiques et mécaniques élevées, et constituée d'une pluralité de tubes métalliques, rigides et adjacents, destinés à être assemblés bout à bout, lequel dispositif comprend:

- une première couche (2) en élastomère, qui entoure ladite conduite (1) à isoler, assurant ainsi la protection anti-corrosion de cette dernière, et

- un moyen d'isolation thermique, qui comprend une couche en matériau isolant lacunaire renfermant de l'air, et qui est superposé de façon continue sur la première couche susdite, lequel dispositif est caractérisé en ce qu'il comporte également:

- une deuxième couche (4) en élastomère étanche à l'eau de mer, résistant à l'abrasion, qui entoure ledit moyen d'isolation thermique, et

- un moyen de jointoyage rapide et étanche des dispositifs d'isolation de deux tubes adjacents, constitué par un anneau (15) ou des coquilles préfabriquées en élastomère incorporant des éléments de matériau thermiquement isolant et résistant à la pression hydrostatique, après soudage des tubes métalliques, dans les zones d'extrémité correspondantes desdits tubes, dépourvues de dispositifs d'isolation, et fixé aux dispositifs d'isolation adjacents desdits tubes à l'aide d'un élastomère ou analogue d'obturation étanche (18, 21, 22), notamment d'un élastomère auto-vulcanisant, ou d'une gaine thermorétractable, pour constituer des zones de continuité (21, 22) entre dispositifs d'isolation adjacents, et en ce que ledit moyen d'isolation thermique est réalisé sous la forme d'au moins deux secteurs adhérisés entre eux par une couche radiale d'élastomère pour former autour du tube à isoler une structure continue, lesdites première et deuxième couches et ledit moyen d'isolation protégeant chaque tube d'une conduite à l'exclusion des extrémités (11) de ce dernier, qui sont laissées sans protection pour permettre la soudure bout à bout de tubes (1) adjacents les uns aux autres avant l'emplacement dudit moyen de jointoyage.

3. Dispositif selon l'une quelconque des revendications 1 ou 2, caractérisé en ce que le matériau isolant lacunaire est constitué par de la mousse de PVC rigide à cellules fermées.

4. Dispositif selon l'une quelconque des revendications 1 ou 2, caractérisé en ce que le matériau isolant lacunaire est un matériau syntactique constitué par des sphères de mousse de PVC à cellules fermées enrobées dans une matrice à base de résine époxy, dont la conductivité thermique est abaissée par adjonction de microbilles de verre.

5. Dispositif selon l'une quelconque des revendications 1 ou 2, caractérisé en ce que le matériau isolant est constitué par un matériau syntactique comprenant des microbilles de verre et des billes en matière plastique, enrobées dans une matrice en résine époxy.

6. Dispositif selon l'une quelconque des revendications 1 à 5, caractérisé en ce que l'élastomère est constitué par du caoutchouc allégé par desmicrobilles de verre qui sont enrobées dans une matrice en caoutchouc.

7. Dispositif selon l'une quelconque des revendications 1 ou 2, caractérisé en ce que le moyen de jointoyage est constitué par un anneau (15) en élastomère fendu longitudinalement ou par deux demi-coquilles en élastomère, renforcés par au moins une bande (16) en matériau lacunaire qui a pour rôle de limiter le flux thermique dans ledit dispositif de jointoyage.

8. Dispositif selon l'une quelconque des revendications 1, 2 ou 7, caractérisé en ce que le moyen de jointoyage comprend des inserts métalliques pour le cerclage (23 ou la fixation (24,25) dudit moyen de jointoyage.

9. Dispositif selon la revendication 8, caractérisé en ce que les inserts métalliques (24,25) sont montés dans ledit anneau (15) en élastomère de manière à être solidaires d'une part de la première couche (2) en élastomère anti-corrosion et d'autre part dudit anneau en élastomère (15).

10. Dispositif selon l'une quelconque des revendications 1, 2 ou 7 à 9, caractérisé en ce que l'élastomère d'obturation étanche qui solidarise le moyen de jointoyage avec les dispositifs d'isolation thermique adjacents montés sur des tubes successifs soudés axialement l'un à l'autre, est pourvu, au moins dans la zone soudée dépourvue de dispositifs d'isolation, d'une gaine (19) en un matériau propre à exercersur l'élastomère d'obturation (18), une force de compression de nature à améliorer encore les propriétés d'adhérence et de bouchage dudit élastomère sur les extrémités aboutées des tubes successifs soudés, initialement dépourvues de dispositif d'isolation.

11. Dispositif d'isolation selon l'une quelconque des revendications 1 ou 2, caractérisé en ce que lesdites zones de continuité (21-22) de solidarisation de l'anneau (15) de jointoyage en élastomère avec les dispositifs d'isolation thermique (10) adjacents sont protégées chacune par une gaine (20) de protection et d'étanchéité adhérente à chaque zone.

12. Dispositif d'isolation selon l'une quelconque des revendications 1 ou 2, caractérisé en ce que la première couche d'élastomère anti-corrosion et la deuxième couche d'élastomère de protection étanche forment, avec le moyen d'isolation thermique, un ensemble solidaire.

13. Procédé de mise en place d'un dispositif d'isolation thermique selon l'une quelconque des revendications 1 à 12, caractérisé en ce que:

- ladite première couche d'élastomère, propre à protéger de la corrosion la surface des tubes métalliques, est mise en place sur la surface extérieure desdits tubes, par tous moyens appropriés, et notamment par enroulement ou "rubannage" de manière à laisser libres sur une courte distance les extrémités aboutées desdits tubes;

- ledit moyen d'isolation thermique lacunaire est mis en place, par tous moyens appropriés, sur la couche en élastomère de protection contre la corrosion;

- ladite deuxième couche en élastomère étanche est mise en place, par tous moyens appropriés, et notamment par enroulement ou "rubannage", sur le moyen d'isolation thermique précité, et

- après soudage bout à bout de tubes métalliques successifs, les zones de soudage de ces derniers qui sont dépourvues de dispositifs d'isolation thermique, sont comblées de façon à assurer la continuité de l'isolation thermique sur la totalité de la longueur de la conduite, à l'aide d'un moyen de jointoyage constitué par unanneau ou des coquilles préfabriqué(es) en élastomère dans lequel sont incorporées des bandes de matériau isolant lacunaire renfermant de l'air, qui ont pour rôle de limiter le flux thermique, lequel moyen de jointoyage est fixé de façon étanche, d'une part, à la zone de soudage susdite et aux extrémités de la couche en élastomère anti-corrosion des moyens d'isolation portés par deux tubes adjacents soudés, à l'aide d'un élastomère auto-vulcanisant, ou mastic et, d'autre part, aux parois en élastomère adhérisé qui encapsulent le matériau d'isolation thermique du moyen d'isolation thermique.

14. Procédé selon la revendication 13, caractérisé en ce que le moyen d'isolation thermique est soumis, préalablement ou après sa mise en place, à un processus de vulcanisation à basse température, inférieure ou égale à 120°C, propre à vulcaniser les feuilles ou couches d'élastomère d'adhérisation.

15. Procédé selon la revendication 13, caractérisé en ce que le moyen d'isolation thermique est soumis à un processus de vulcanisation à basse température conjointement avec la couche d'élastomère sous-jacente qui entoure la surface extérieure de la conduite et avec la couche d'élastomère extérieure qui entoure le moyen d'isolation, après la mise en place de ces éléments superposés sur la conduite isolée.

16. Procédé selon l'une quelconque des revendications 13 à 15, caractérisé en ce que la couche d'élastomère anti-corrosion et la couche en élastomère isolante qui recouvre le moyen d'isolation thermique, font partie intégrante dudit moyen, c'est-à-dire qu'elles forment un tout avec ce dernier.

17. Procédé selon la revendication 13, caractérisé en ce qu'une pluralité de bandes de matériau isolant lacunaire renfermant de l'air, est constituée en enroulements suivant un pas tel qu'il subsiste entre deux bandes successives un espace libre dans lequel est intercalé l'élastomère d'adhérisation, le stratifié obtenu à partir de cette pluralité d'enroulements présentant une très grande souplesse qui est fonction de la largeur de l'intervalle qui sépare deux pas consécutifs.

18. Procédé selon la revendication 14, caractérisé en ce que les couches superposées qui composent le moyen d'isolation thermique sont adhérisées entre elles, préalablement à leur mise en place, par vulcanisation sur un mandrin ou support analogue.

19. Procédé selon la revendication 13, caractérisé en ce que les secteurs qui forment le moyen d'isolation thermique sont avantageusement préfabriqués par adhérisarion des secteurs entre eux par de l'élastomère, pour être enfilés sur chacun des tubes à isoler.

20. Procédé selon la revendication 19, caractérisé en ce que la liaison entre les secteurs qui forment ledit moyen d'isolation thermique, est réalisée à l'aide d'élastomère cru et l'adhérisation est obtenue par vulcanisation à basse température sur le tube à isoler.

21. Procédé selon l'une quelconque des revendications 13a 20, caractérisé en ce que l'anneau en élastomère qui constitue le moyen de jointoyage est obtenu par enroulements successifs, sur un mandrin, de bandes de matériau isolant lacunaire renfermant de l'air et de bandes d'élastomère, puis vulcanisation de l'ensemble à une température inférieure ou égale à 120°C.

22. Procédé selon l'une quelconque des revendications 13 à 20, caractérisé en ce que le moyen de jointoyage est fixé aux zones soudées des tubes, dépourvues de dispositifs d'isolation thermique, par un élastomère auto-vulcanisant qui est pourvu d'une gaine en matériau rétractable, notamment en polyéthylène rétractable par chauffage, qui, à l'état rétracté, exerce des forces de compression sur l'élastomère auto-vulcanisant qui sont telles que ce dernier adhère fortement d'une part à la zone de soudure sousjacente et d'autre part aux couches d'élastomère anti-corrosion qui entourent ladite zone de soudure, pour ancrer le moyen de jointoyage.

**Patentansprüche**

1. Vorrichtung zur thermischen Isolation einer Unterseeleitung, die erhöhten thermischen, hydrostatischen und mechanischen Beanspruchungen unterworfen ist und die von einer Mehrzahl von metallischen, starren und benachbarten Rohren gebildet ist, die dazu bestimmt sind, Ende an Ende zusammmengefügt zu werden, welche Vorrichtung folgendes umfaßt:

- eine erste Schicht (2) aus Elastomer, welche die zu isolierende Leitung (1) umschließt, so daß sie auf diese Art den Korrosionsschutz dieser letzteren sicherstellt, und

- ein Mittel zur thermischen Isolation, welches eine Mehrzahl von Schichten aus isolierendem, blasigem, lufteinschließendem Material umfaßt, die durch elastomere Schichten getrennt sind, wobei die verschiedenen Schichten eine an der anderen anhaften, und das in kontinuierlicher Weise auf die erwähnte erste Schicht geschichtet ist, welche Vorrichtung dadurch gekennzeichnet ist, daß sie weiterhin folgendes umfaßt:

- eine zweite Schicht (4) aus Elastomer die gegenüber Meerwasser dicht und gegen Abrasion beständig ist, welche das erwähnte Mittel zur thermischen Isolation umschließt, und

- ein Mittel zur schnellen und dichten Verfugung der Vorrichtungen zur Isolation von zwei benachbarten Rohren, das von einem Ring (15) oder vorgefertigten Schalen aus Elastomer gebildet ist, worin Elemente aus thermisch isolierendem und gegen hydrostatischen Druck widerstandsfähigem Material untergebracht sind, und zwar nach Verschweißen der metallischen Rohre in den entsprechenden Endzonen dieser Rohre, die nicht mit Vorrichtungen zur Isolation versehen sind, und befestigt an den benachbarten Vorrichtungen zur Isolation der erwähnten Rohre mit Hilfe eines Elastomers oder Ähnlichem zum dichten Ausfüllen (18, 21, 22), insbesondere eines selbstvulkanisierenden Elastomers oder einer wärmezusammenziehbaren Hülle, um Kontinuitätszonen (21, 22) zwischen benachbarten. Vorrichtungen zur Isolation zu bilden,

welche erste und zweite Schicht und welche Mittel zur Isolation jedes Rohr einer Leitung mit Ausschluß der Enden (11) dieses letzteren schützen, die ohne Schutz gelassen sind, um das Verschweißen Ende an Ende von benachbarten Rohren (1) miteinander vor der Plazierung des erwähnten Mittels der Verfugung zu ermöglichen.

2. Vorrichtung zur thermischen Isolation einer Unterseeleitung, die erhöhten thermischen, hydrostatischen und mechanischen Beanspruchungen unterworfen ist und die von einer Mehrzahl von metallischen, starren und benachbarten Rohren gebildet ist, die dazu bestimmt sind, Ende an Ende zusammengefügt zu werden, welche Vorrichtung folgendes umfaßt:

- eine erste Schicht (2) aus Elastomer, welche die zu isolierende Leitung (1) umschließt, so daß sie auf diese Art den Korrosionsschutz dieser letzteren sicherstellt, und

- ein Mittel zur thermischen Isolation, welches eine Schicht aus isolierendem blasigem, lufteinschließendem Material umfaßt und das in kontinuierlicher Weise auf die erwähnte erste Schicht geschichtet ist,

welche Vorrichtung dadurch gekennzeichnet ist, daß sie weiterhin folgendes umfaßt:

- eine zweite Schicht (4) aus Elastomer, die gegenüber Meerwasser dicht und gegen Abrasion beständig ist, welche das erwähnte Mittel zur thermischen Isolation umschließt, und

- ein Mittel zur schnellen und dichten Verfugung der Vorrichtungen zur Isolation von zwei benachbarten Rohren, das von einem Ring (15) oder vorgefertigten Schalen aus Elastomer gebildet ist, worin Elemente aus thermisch isolierendem und gegen hydrostatischen Druck widerstandsfähigem Material untergebracht sind, und zwar nach Verschweißen der metallischen Rohre in den entsprechenden Endzonen dieser Rohre, die nicht mit Vorrichtungen zur Isolation versehen sind, und befestigt an den benachbarten Vorrichtungen zur Isolation der erwähnten Rohre mit Hilfe eines Elastomers oder Ähnlichem zum dichten Ausfüllen (18, 21, 22), insbesondere eines selbstvulkanisierenden Elastomers oder einer wärmezusammenziehbaren Hülle, um Kontinuitätszonen (21, 22) zwischen benachbarten Vorrichtungen zur Isolation zu bilden,

und dadurch, daß das Mittel zur thermischen Isolation in der Form von wenigstens zwei Sektoren realisiert ist, die untereinander durch eine radiale Schicht aus Elastomer aneinander geklebt sind, um um das zu isolierende Rohr eine kontinuierliche Struktur zu bilden, welche erste und zweite Schicht und welche Mittel zur Isolation jedes Rohr einer Leitung mit Ausschluß der Enden (11) dieses letzteren schützen, die ohne Schutz gelassen sind, um das Verschweißen Ende an Ende von benachbarten Rohren (1) miteinander vor der Plazierung des erwähnten Mittels der Verfugung zu ermöglichen.

3. Vorrichtung nach irgendeinem der Ansprüche 1 oder 2, dadurch gekennzeichnet, daß das blasige isolierende Material von steifem PVC-Schaum mit geschlossen Zellen gebildet ist.

4. Vorrichtung nach irgendeinem der Ansprüche 1 oder 2, dadurch gekennzeichnet, daß das blasige isolierende Material ein syntaktisches Material ist, das von Kugeln aus PVC-Schaum mit geschlossenen Zellen gebildet ist, die in einer Matrix auf der Basis von Epoxyharz eingebettet sind, deren Wärmeleitfähigkeit durch Zusatz von Mikrokugeln aus Glas erniedrigt ist.

5. Vorrichtung nach irgendeinem der Ansprüche 1 oder 2, dadurch gekennzeichnet, daß das isolierende Material von einem syntaktischen Material gebildet ist, das Mikrokugeln aus Glas und Kugeln aus Kunststoff umfaßt, die in einer Matrix aus Epoxyharz eingebettet sind.

6. Vorrichtung nach irgendeinem der Ansprüche 1 bis 5, dadurch gekennzeichnet, daß das Elastomer von Kautschuk gebildet ist, der durch Mikrokugeln aus Glas leichter gemacht ist, welche in einer Matrix aus Kautschuk eingebettet sind.

7. Vorrichtung nach irgendeinem der Ansprüche 1 oder 2, dadurch gekennzeichnet, daß das Mittel der Verfugung von einem longitudinal geschlitzten Ring (15) aus Elastomer oder von zwei Halbschalen aus Elastomer gebildet ist, und zwar verstärkt durch wenigstens einen Streifen (16) aus blasigem Material, das die Funktion hat, den Wärmefluß in der erwähnten Vorrichtung zur Verfugung zu beschränken.

8. Vorrichtung nach irgendeinem der Ansprüche 1, 2 oder 7, dadurch gekennzeichnet, daß das Mittel der Verfugung metallische Einsätze für die Umreifung (23) oder die Befestigung (24, 25) des erwähnten Mittels der Verfugung umfaßt.

9. Vorrichtung nach Anspruch 8, dadurch gekennzeichnet, daß die metallischen Einsätze (24, 25) in dem Ring (15) aus Elastomer in der Weise angebracht sind, daß sie einerseits mit der ersten Schicht (2) aus Korrosionsschutzelastomer und andererseits mit dem Ring aus Elastomer (15) fest verbunden sind.

10. Vorrichtung nach irgendeinem der Ansprüche 1, 2 oder 7 bis 9, dadurch gekennzeichnet, daß das Elastomer des dichten Verschlusses, welches das Mittel der Verfugung mit den benachbarten Vorrichtungen zur thermischen Isolation, die auf aufeinanderfolgenden Rohren angebracht sind, welche axial miteinander verschweißt sind, fest verbindet, wenigstens in der geschweißten Zone, die nicht mit Vorrichtungen zur Isolation versehen ist, mit einer Hülle (19) aus einem Material versehen ist, das dazu geeignet ist, auf das Elastomer des Verschlusses (18) eine Kompressionskraft der Art auszuüben, daß die Eigenschaften der Haftung und des Abdichtens des erwähnten Elastomers auf den aneinandergefügten Enden von aufeinanderfolgenden verschweißten Rohren, die anfänglich nicht mit einer Vorrichtung zur Isolation versehen sind, noch verbessert werden.

11. Vorrichtung zur Isolation nach irgendeinem der Ansprüche 1 oder 2, dadurch gekennzeichnet, daß die erwähnten Kontinuitätszonen (21-22) der festen Verbindung des Rings (15) der Verfugung aus Elastomer mit den benachbarten Vorrichtungen zur thermischen Isolation (10) jede durch eine Schutzund Dichtheitshülle (20), die an jeder Zone anhaftet, geschützt sind.

12. Vorrichtung zur Isolation nach irgendeinem der Ansprüche 1 oder 2, dadurch gekennzeichnet, daß die erste Schicht aus Korrosionsschutzelastomer und die zweite Schicht aus dichtem Schutzelastomer mit dem Mittel zur thermischen Isolation eine einstückige Gesamtheit bilden.

13. Verfahren zum Anbringen einer Vorrichtung zur thermischen Isolation nach irgendeinem der Ansprüche 1 bis 12, dadurch gekennzeichnet, daß:

- die erwähnte erste Schicht aus Elastomer, die dazu geeignet ist, die Oberfläche der metallischen Rohre vor Korrosion zu schützen, auf der äußeren Oberfläche dieser Rohre angebracht wird, und zwar durch alle geeigneten Mittel, und insbesondere durch Bewicklung oder "Bebänderung" in der Weise, daß über eine kurze Strecke die aneinandergefügten Enden dieser Rohre freigelassen werden;

- das erwähnte blasige Mittel zur thermischen Isolation durch alle geeigneten Mittel auf der Schicht aus Elastomer für den Schutz gegen die Korrosion angebracht wird.

- die erwähnte zweite Schicht aus dichtem Elastomer durch alle geeigneten Mittel, und insbesondere durch Bewicklung oder "Bebänderung", auf dem vorgenannten Mittel zur thermischen Isolation angebracht wird, und

- nach dem Verschweißen Ende an Ende der aufeinanderfolgenden metallischen Rohre die Zonen der Verschweißung dieser letzteren, die nicht mit Vorrichtungen zur thermischen Isolation versehen sind, in der Weise ausgefüllt werden, daß die Kontinuität der thermischen Isolation auf der Gesamtheit der Länge der Leitung sichergestellt wird, und zwar mit Hilfe eines Mittels der Verfugung, das von einem vorgefertigten Ring oder vorgefertigten Schalen aus Elastomer gebildet ist, worin Streifen aus blasigem isolierendem Material, welches Luft enthält, untergebracht sind, welche die Funktion haben, den Wärmefluß zu beschränken, welches Mittel der Verfugung in dichter Weise einerseits an der erwähnten Zone der Verschweißung und an den Enden der Schicht aus Korrosionsschutzelastomer der Mittel zur Isolation, die von zwei benachbarten verschweißten Rohren getragen sind, mit Hilfe eines selbstvulkanisierenden Elastomers, oder Bindemittels, und andererseits an aneinandergeklebten Wänden aus Elastomer, welche das Material zur thermischen Isolation des Mittels der thermischen Isolation einkapseln, befestigt ist.

14. Verfahren nach Anspruch 13, dadurch gekennzeichnet, daß das Mittel zur thermischen Isolation vorher oder nach seiner Anbringung einem Vulkanisationsprozeß bei niedriger Temperatur unter oder gleich 120°C der geeignet ist, die Folien oder Schichten des Elastomers der Aneinanderklebung zu vulkanisieren, unterworfen wird.

15. Verfahren nach Anspruch 13, dadurch gekennzeichnet, daß das Mittel zur thermischen Isolation einem Prozeß der Vukanisation bei niedriger Temperatur zusammen mit der darunterliegenden Schicht aus Elastomer, welche die äußere Oberfläche der Leitung umgibt, und mit der äußeren Schicht aus Elastomer, welche das Mittel zur Isolation umgibt, unterworfen wird, nachdem diese Elemente übereinandergeschichtet auf der isolierten Leitung angebracht worden sind.

16. Verfahren nach irgendeinem der Ansprüche 13 bis 15, dadurch gekennzeichnet, daß die Schicht aus Korrosionsschutzelastomer und die Schicht aus isolierendem Elastomer, welche das Mittel zur thermischen Isolation bedeckt, einen integralen Teil dieses Mittels bilden, d.h. daß sie mit letzterem eine Gesamtheit bilden.

17. Verfahren nach Anspruch 13, dadurch gekennzeichnet, daß eine Mehrzahl von Streifen aus blasigem isolierendem Material, welches Luft enthält, in Bewicklungen gemäß einer Steigung derart gebildet ist, daß zwischen zwei aufeinanderfolgenden Streifen ein freier Raum besteht, in welchem das Elastomer der Aneinanderklebung eingelagert ist, wobei der Schichtstoff, der von dieser Mehrzahl von Bewicklungen erhalten worden ist, eine sehr große Geschmeidigkeit hat, die eine ·Funktion der Breite des Intervalls ist, welches zwei aufeinanderfolgende Ganghöhen trennt.

18. Verfahren nach Anspruch 14, dadurch gekennzeichnet, daß die übereinandergeschichteten Schichten, welche das Mittel der thermischen Isolation bilden, untereinander vor ihrer Anbringung durch Vulkanisation auf einem Kern oder ähnlichem Träger aneinandergeklebt werden.

19. Verfahren nach Anspruch 13, dadurch gekennzeichnet, daß die Sektoren, welche das Mittel zur thermischen Isolation bilden, vorteilhafterweise durch Aneinanderkleben von Sektoren untereinander durch das Elastomer vorgefertigt sind, um auf jedes der zu isolierenden Rohre aufgereiht zu werden.

20. Verfahren nach Anspruch 19, dadurch gekennzeichnet, daß die Verbindung zwischen den Sektoren, welche das erwähnte Mittel zur thermischen Isolation bilden, mit Hilfe eines rohen Elastomers realisiert und die Aneinanderklebung durch Vulkanisation bei niedriger Temperatur auf dem zu isolierenden Rohr erhalten wird.

21. Verfahren nach irgendeinem der Ansprüche 13 bis 20, dadurch gekennzeichnet, daß der Ring aus Elastomer, der das Mittel der Verfugung bildet, durch aufeinanderfolgende Bewicklungen von Streifen aus blasigem isolierendem Material, das Luft enthält, und Streifen aus Elastomer auf einem Kern, danach Vulkanisation des Gesamten bei einer Temperatur unter oder gleich 120°C erhalten wird.

22. Verfahren nach irgendeinem der Ansprüche 13 bis 20, dadurch gekennzeichnet, daß das Mittel der Verfugung an Verschweißungszonen der Rohre, die nicht mit Vorrichtungen zur thermischen Isolation versehen sind, durch ein selbstvulkanisierendes Elastomer befestigt wird, welches mit einer Hülle aus zusammenziehbarem Material, insbesondere aus durch Erwärmen zusammenziehbarem Polyethylen, versehen ist, welche im zusammengezogenen Zustand Kompressionskräfte auf das selbstvulkanisierende Elastomer ausübt, die derart sind, daß letzteres einerseits an der darunterliegenden Verschweißungszone und andererseits an Schichten aus Korrosionsschutzelastomer, welche die erwähnte Verschweißungszone umgeben, starkt anhaftet, um das Mittel der Verfugung zu verankern.

## Claims

1. Thermal insulating device for a submarine pipe subject to high thermal hydrostatic and mechanical stresses, and constituted by a plurality of rigid and adjacent metal tubes, designed to be assembled end-to-end, which device comprises:
- a first layer (2) of elastomer, which engirdles said pipe (1) to be insulated, thus ensuring the anticorrosion protection of the latter, and
- a thermal insulating means which comprises a plurality of layers of lacunar insulating material enclosing air separated by elastomeric layers, the different layers adhering to one another, and which is superposed continuously on the first abovesaid layer, which device is characterized in that it comprises also:
- a second layer (4) of sea-water-tight elastomer, resistant to abrasion, which engirdles said thermal insulating means, and
- a rapid and fluid-tight jointing means of the insulating devices of two adjacent tubes, constituted by a ring (15) or shells prefabricated of elastomer, incorporating elements of heat insulating material and resistant to hydrostatic pressure, after welding of the metal tubes, in the corresponding end zones of said tubes, devoid of insulating devices, and fixed to the adjacent insulating devices of said tubes by means of an elastomer or similar fluid tight seal (18, 21, 22), particularly of a self-vulcanizing elastomer, or a heat retractable sheet, to constitute zones of continuity (21, 22) between adjacent insulating devices said first and second layer and said insulating means protecting each tube of a pipe with the exclusion of the ends (11) of the latter, which are left without protection to permit the end-to-end welding of adjacent tubes (1) to one another before the positioning of said jointing means.

2. Thermal insulating device for a submarine pipe subject to high thermal, hydrostatic and mechanical stresses, and constituted by a plurality of rigid and adjacent metal tubes, designed to be assembled end-to-end, which device comprises:
- a first layer (2) of elastomer, which engirdles said pipe (1) to be insulated, thus ensuring the anticorrosion protection of the latter, and
- a heat insulating means, which comprises a layer of lacunar insulating material containing air, and which is superimposed continuously on the first abovesaid layer, which device is characterized in that it comprises also:
- a second layer (4) of sea-water-tight elastomer, resistant to abrasion, which engirdles said heat insulating means,
- and a rapid and fluid tight jointing means of the insulating devices of two adjacent tubes, constituted by a ring (15) or prefabricated shells of elastomer incorporating elements of heat insulating material and resistant to hydrostatic pressure, after welding of the metal tubes, in the corresponding end zones of said tubes, devoid of insulating devices, and fixed to the adjacent insulating devices of said tubes by means of an elastomer or similar fluid tight seal (18, 21, 22), particularly a self-vulcanizing elastomer, or a heat retractable sheath, to constitute continuity zones (21, 22) between adjacent insulating devices, and in that said heat insulating means is constructed in the form of at least two sectors adhered to each other by a radial layer of elastomer to form around the tube to be insulated a continuous structure, said first and second layers and said insulating means protecting each tube of a pipe with the exclusion of the ends (11) of the latter, which are left without protection to permit the end-to-end welding of adjacent tubes (1) to one another before the positioning of said jointing means.

3. Device according to any one of claims 1 or 2, characterized in that the lacunar insulating

material is constituted by rigid closed cell PVC foam.

4. Device according to any one of claims 1 or 2, characterized in that said lacunar insulating material is a syntactic material constituted by closed cell PVC foam spheres coated in an epoxy resin-based matrix, whose thermal conductivity is lowered by the addition of glass microbeads.

5. Device according to any one of claims 1 or 2, characterized in that said insulating material is constituted by syntactic material comprising glass microbeads and beads of plastic material, coated in an epoxy resin matrix.

6. Device according to any one of claims 1 to 5, characterized in that the elastomer is constituted by rubber lightened with glass microbeads which are coated in a rubber matrix.

7. Device according to any one of claims 1 or 2, characterized in that the jointing means is constituted by a ring (15) of elastomer split longitudinally or by two elastomeric half-shells, reinforced by at least one strip (16) of lacunar material which is for the purpose of limiting the heat flow in said jointing device.

8. Device according to any one of claims 1, 2 or 7, characterized in that the jointing means comprises metal inserts for the binding or fastening (24, 25) of said jointing means.

9. Device according to claim 8, characterized in that the metal inserts (24, 25) are mounted in said ring (15) of elastomer so as to be fast on the one hand to the first layer (2) of anti-corrosion elastomer and on the other hand to said ring of elastomer (15).

10. Device according to any one of claims 1, 2 or 7 to 9, characterized in that the fluid tight sealing elastomer which secures the jointing means with the adjacent heat insulating devices mounted on successive tubes welded axially to one another, is provided, at least in the welded zone devoid of insulating devices, with a sheath (19) of a material adapted to exert on the sealing elastomer (18), a compression force of a nature to further improve the adhering and plugging properties of said elastomer on the abutting ends of welded successive tubes, initially devoid of insulating device.

11. Insulating device according to any one of claims 1 or 2, characterized in that said continuity zones (21-22) for making fast the jointing ring (15) of elastomer with the adjacent thermal insulating devices (10) are each protected by a sheath (20) of protection and fluid tightness adherent to each zone.

12. Insulating device according to any one of claims 1 or 2, characterized in that the first layer of anti-corrosion elastomer and the second layer of fluid tight protective elastomer form, with the heat insulating means, a solid unit.

13. Method of positioning a thermal insulating device according to any one of claims 1 to 12, characterized in that:

- said first layer of elastomer, adapted to protect from corrosion the surface of the metal tubes, is placed in position on the outer surface of said tubes, by any suitable means, and particularly by wrapping or "taping" so as to leave free over a short distance the abutting ends of said tubes;

- said lacunar heat insulating means is placed in position, by any suitable means, on the layer of elastomer for protection against corrosion;

said second layer of sealing elastomer is placed in position, by any suitable means, and particularly by wrapping or "taping", on the aforesaid heat insulating means, and

- after end-to-end welding of successive metal tubes, the welding zones of the latter which are devoid of heat insulating devices, are filled so as to ensure the continuity of the heat insulation over the whole of the length of the pipe, by means of a jointing means constituted by a prefabricated ring or shells of elastomer in which are incorporated strips of lacunar insulating material enclosing air, which are for the purpose of limiting the heat flow, which jointing means is fixed in fluid tight manner, on the one hand, to the abovesaid welding zone and to the ends of the layer of anti-corrosion elastimer of the insulating means borne by two welded adjacent tubes, by means of a self-vulcanizing elastomer, or mastic and, on the other hand, to the walls of adhered elastomer which encapsulate the heat insulating material of the heat insulating means.

14. Method according to claim 13, characterized in that the heat insulating means is subject, prior or after its positioning, to a vulcanization process at low temperature, below or equal to 120 C, adapted to vulcanize the sheets or layers of adhesion elastomer.

15. Method according to claim 13, characterized in that the heat insulating means is subjected to a low temperature vulcanisation process conjointly with the sub-adjacent elastomeric layer which engirdles the outer surface of the pipe and with the outer elastomeric layer which engirdles the insulating means, after the positioning of these superposed elements on the insulated pipe.

16. Method according to any one of claims 13 to 15, characterized in that the layer of anticorrosion elastomer and the layer of insulating elastomer which covers the heat-insulating means, form an integral part of said means, that is to say they form a whole with the latter.

17. Method according to claim 13, characterized in that a plurality of bands of lacunar insulating material enclosing air, is constituted of windings of a pitch such that there subsists between two successive strips a free space in which is intercalated the adhesion elastomer, the laminate obtained from this plurality of windings having a very great flexibility which is a function of the width of the interval which separates two successive pitches.

18. Method according to claim 14, characterized in that the superposed layers which compose the heat insulating means are adhered to one another, prior to their positioning, by vulcanization on a mandrel or similar support.

19. Method according to claim 13, characterized in that the sectors which form the heat insulating means are advantageously prefabricated by adhesion of the sectors with one another by the elastomer, to be fitted over each of the tubes to be insulated.

20. Method according to claim 19, characterized in that the bond between the sectors which form said heat insulating means, is formed by means of a raw elastomer and the adhesion is obtained by low temperature vulcanization on the tube to be insulated.

21. Method according to any one of claims 13 to 20, characterized in that the ring of elastomer which constitutes the jointing means is obtained by successive windings, on a mandrel, of strips of lacunar insulating material enclosing air and strips of elastomer, then vulcanization of the assembly at a temperature below or equal to 120 C.

22. Method according to any one of claims 13 to 20, characterized in that the jointing means is fixed to the welded zones of the tubes, devoid of heat insulating devices, by a self-vulcanizing elastomer which is provided with a sheath of retractable material, particularly of polyethylene retractable by heating, which in the retracted state, exerts compressive forces on the self-vulcanizing elastomer which are such that the latter adheres strongly on the one hand to the sub-adjacent welding zone and on the other hand to the layers of anti-corrosion elastomer which engirdles said welding zone, to anchor the jointing means.

FIG. 1

FIG. 2

FIG. 3

FIG. 4

FIG. 5

FIG. 6

FIG.7

FIG. 8